# EUROPEAN PATENT SPECIFICATION

(11) **EP 1 564 091 B1**
(45) Date of publication and mention of the grant of the patent: **08.11.2006**
(21) Application number: 05101020.5
(22) Date of filing: 11.02.2005
(51) Int. Cl.: B60R 25/02

(54) **Steering lock device for an automotive steering assembly**
Lenkschloss für Fahrzeuglenkvorrichtung
Verrou de direction pour la direction d'un véhicule

(30) Priority: 13.02.2004 IT TO20040082
(43) Date of publication of application: 17.08.2005
(73) Proprietor: TRW Automotive Italia S.p.A, 10129 Torino (IT)
(72) Inventor: Graglia, Daniele, 10026 Santena (IT)
(74) Representative: Jorio, Paolo

(56) References cited:
- EP-A- 0 957 015

## Description

The present invention relates to a steering lock device for an automotive steering assembly.

As is known, automotive steering assemblies comprise a tubular supporting body; and a control shaft, or so-called steering column, housed coaxially inside the tubular supporting body and rotated about its axis by the steering wheel of the vehicle.

Steering assemblies all have a steering lock device comprising a guide fitted to the tubular supporting body; and a slide-mounted lock body fitted to the guide to slide in a direction crosswise to the steering column, and movable between a forward lock position angularly locking the steering column, and a withdrawn rest position allowing the steering column to rotate freely.

Withdrawal of the slide-mounted lock body into the rest position is normally controlled by a key-operated lock with the interposition of an actuating assembly.

A typical prior art steering lock can be seen in EP-A-957015.

A need is felt for an improved actuating assembly, which is fully mechanical and compact, comprises a relatively small number of component parts, and can be arranged so that the angle between the lock drum or key rotation axis and the translation direction of the slide-mounted lock body is other than zero and other than ninety degrees.

A need is also felt for a solution designed to prevent sudden, undesired locking of the steering column, in the event of accidental damage to the actuating assembly when the vehicle is running.

It is an object of the present invention to provide a steering lock device for an automotive steering assembly, designed to meet the above requirements in a straightforward, low-cost manner.

According to the present invention, there is provided a steering lock device for an automotive steering assembly, as claimed in Claim 1.

A non-limiting embodiment of the invention will be described by way of example with reference to the accompanying drawings, in which:
Figure 1 shows a partly exploded view in perspective of a preferred embodiment of the steering lock device for an automotive steering assembly according to the present invention;
Figure 2 shows a cross section of the Figure 1 device;
Figure 3 is similar to Figure 2, and shows a larger-scale view, with parts removed for clarity, of a first variation of the Figure 1 device;
Figure 4 shows a schematic side view of a second variation of the Figure 1 device;
Figure 5 shows an enlarged view in perspective of a detail in Figure 4.

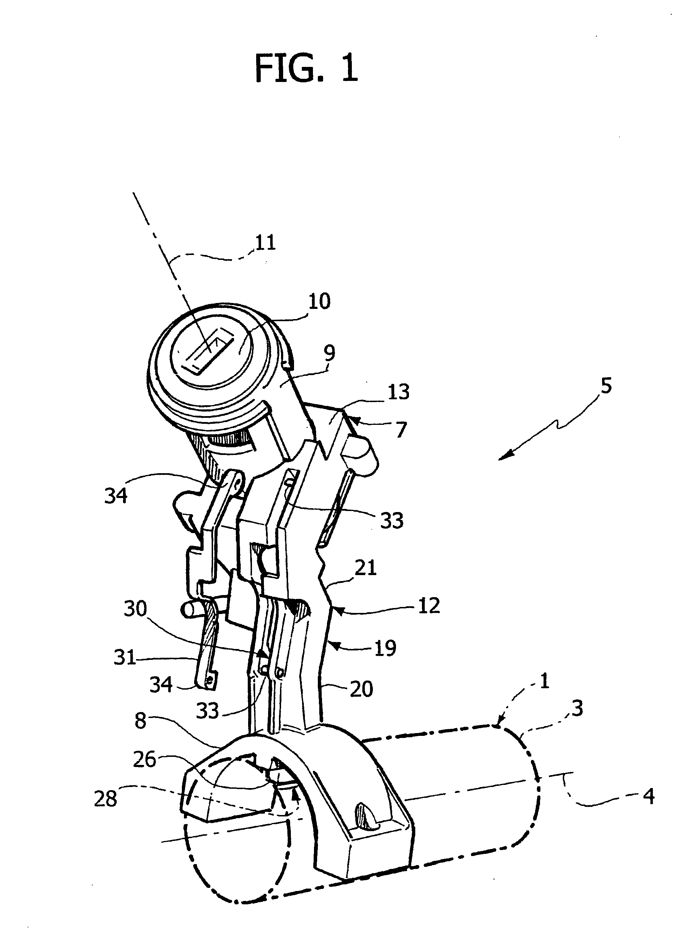

Number 1 in Figure 1 indicates as a whole a steering assembly (shown partly), which comprises a fixed tubular body (not shown) having a lateral opening; and a control shaft or steering column 3 (shown by the dot-and-dash line). Steering column 3 has an axis 4, extends coaxially inside the fixed tubular body, and is rotated about axis 4 by a steering wheel (not shown) of the vehicle.

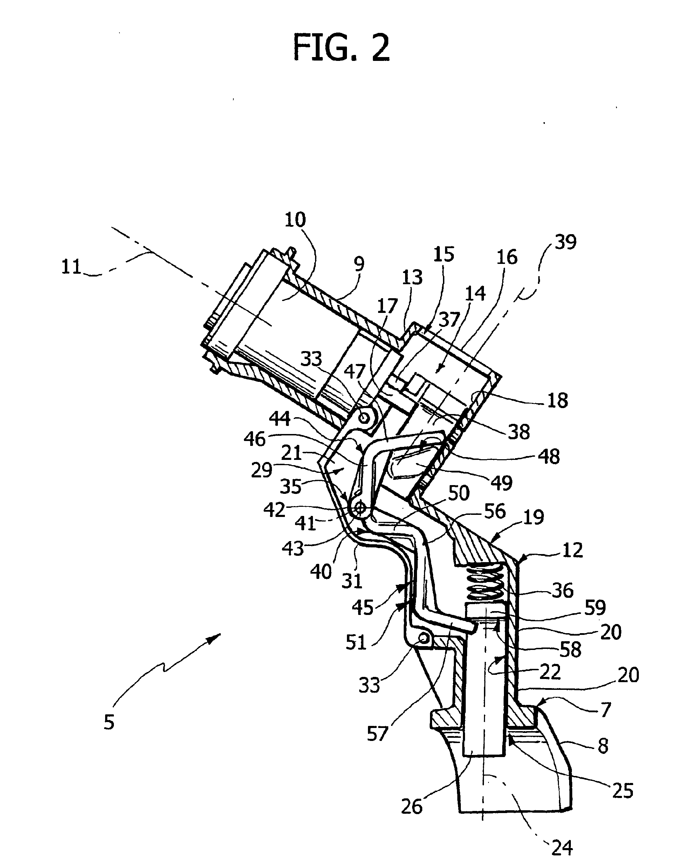

With reference to Figures 1 and 2, steering assembly 1 has a steering lock device 5 comprising a casing 7, which is formed in one piece and terminates, on one side, with a fastening flange 8 fitted integrally to the fixed tubular body of assembly 1 in known manner not shown in detail.

On the other side, casing 7 terminates with a cylindrical tubular portion 9, which houses a lock 10 operated by a key (not shown), and extends along an axis 11 oblique with respect to axis 4 and coincident with the key insertion and rotation axis inside lock 10.

With reference to Figure 2, flange 8 and portion 9 are joined by a hollow intermediate portion 12 comprising an axial extension 13 of portion 9. Extension 13 defines a cavity 14 having an access opening 15 closed by a wall 16, which extends parallel to axis 11 and is fixed non-releasably to extension 13 in a manner not described in detail.

Cavity 14 houses an actuating shaft 17, which extends along axis 11 towards an end wall 18 of extension 13, and is rotated axially by lock 10.

Portion 12 comprises an arm 19 defined by a straight portion 20 projecting from flange 8 and perpendicular to steering column 3, and by a substantially elbow-shaped portion 21 connecting portion 20 to extension 13.

Portion 20 defines an inner guide seat 22, which extends along an axis 24 perpendicular to axis 4, comes out axially through an opening 25 formed in flange 8 and facing said lateral opening in the fixed tubular body of assembly 1, and is engaged in sliding manner by a lock slide 26. More specifically, slide 26 is guided by seat 22 along axis 24 between a forward lock position, in which it extends through opening 25 to engage a retaining cavity 28, formed in steering column 3 (Figure 1), and so angularly lock steering column 3, and a withdrawn rest position, in which it releases cavity 28 to allow steering column 3 to rotate freely about axis 4.

Portion 21, on the other hand, defines an inner slot 29, which extends along a plane containing axis 24 (and coincident with the Figure 2 section plane), and comes out, on one side, inside seat 22 and, on the other side, inside cavity 14 and opposite opening 15.

Slot 29 has a front access slit 30 closed outwardly by a strap 31, which is elongated in a direction parallel to axis 24, is shaped to match the outer contour of portion 21, and is fitted non-releasably to portion 21, in particular by means of two pins 33 fitted through the lateral walls of casing 7 and the ends 34 of strap 31 (Figure 1) .

With reference to Figure 2, device 5 comprises a transmission 35, which is activated by lock 10 to withdraw slide 26 into the rest position in opposition of an elastic member 36 housed at the end of seat 22.

Transmission 35 comprises a radial cam 37 integral with shaft 17; and a bolt 38, which is guided by cavity 14 to slide along an axis 39 perpendicular to axis 11, coplanar with axis 24, and forming with axis 24 an angle of other than 0° and other than 90°, and preferably an angle of about 30-35°. Bolt 38 is fitted to cam 37, in a manner not shown in detail, to translate along axis 39 and rotate a rocker arm lever 40 forming part of transmission 35.

Lever 40 is substantially W-shaped, is housed in slot 29, and comprises an intermediate portion 42 hinged to portion 21 by a cylindrical pin 43 to rotate about an axis 41 perpendicular to axes 39, 24.

Lever 40 comprises two opposite arms 44, 45. Arm 44 is L-shaped and in turn comprises two straight branches 46, 47 forming an angle of over 90°. Branch 46 extends from portion 42 towards cavity 14, while branch 47 defines the end of arm 44, extends inside cavity 14, crosswise to axis 39, and rests on a shoulder 48 carried by bolt 38. More specifically, shoulder 48 is defined by a surface parallel to axis 41, forms an angle of other than 90° with axis 39, slopes towards axis 41, and defines a projection 49 formed in one piece with bolt 38.

Arm 45 is substantially Z-shaped, and comprises a straight branch 50 extending from portion 42 towards seat 22 and forming an angle of about 90° with branch 46. Arm 45 also comprises an L-shaped end portion 51, in turn comprising two straight branches 56, 57 forming an angle of just over 90°. Branch 56 extends from branch 50 towards opening 25, while branch 57 defines one end of arm 45, extends crosswise to axis 24, and rests on a shoulder 58, which is defined by a surface parallel to axis 41 and perpendicular to axis 24, and defines a projection 59 formed in one piece with slide 26. More specifically, projection 59 is interposed between member 36 and branch 57 along axis 24.

At the assembly stage, after fitting lock 10 to portion 11, elastic member 36 and slide 26 are inserted successively along axis 24 and through opening 25 into seat 22, and bolt 38 is inserted along axis 39 and through opening 15 into cavity 14 and is fitted to cam 37. At this point opening 15 can be closed permanently by wall 16, and lever 40 can be inserted inside slot 29 through slit 30.

Once lever 40 is positioned inside slot 29, with projections 49, 59 interposed between branches 47 and 57, pin 43 is assembled to hinge lever 40 to portion 21, and, finally, slit 30 is closed permanently by strap 31.

In actual use, starting from an operating condition in which slide 26 is in the forward lock position, rotation of the key in lock 10 moves bolt 38 towards wall 16 in opposition to the elastic action of member 36, so that lever 40 rotates (anticlockwise in Figure 2) about axis 41, and slide 26 withdraws into the rest position, thus releasing cavity 28.

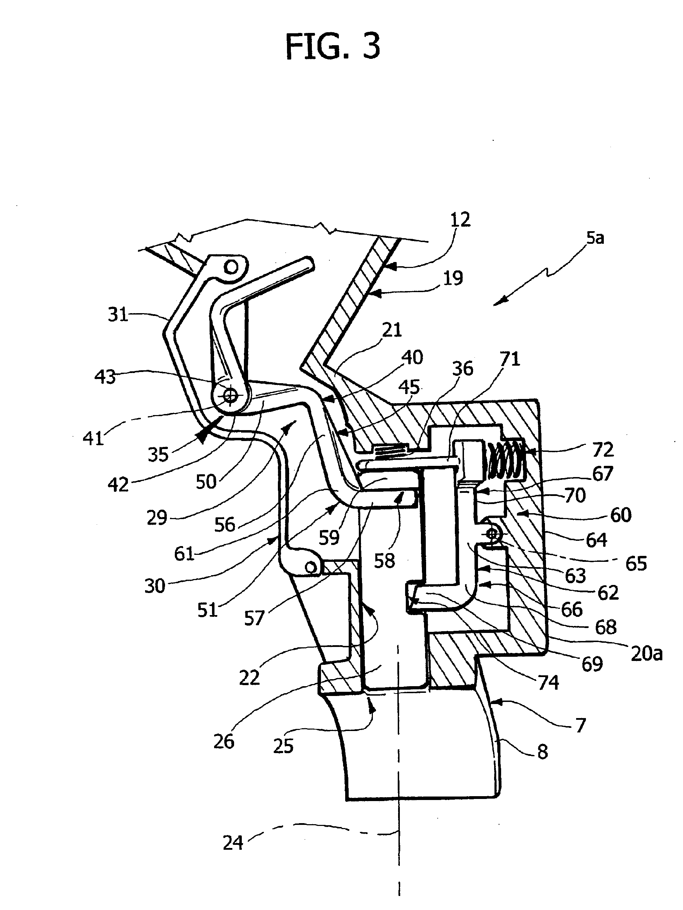

Figure 3 shows, schematically, a variation 5a, in which the component parts are indicated where possible using the same reference numbers as for device 5 in Figures 1 and 2.

Variation 5a in Figure 3 differs from device 5 by comprising an additional safety device 60 for preventing slide 26 from moving from the rest position to the lock position, i.e. from engaging cavity 28, in normal vehicle running conditions, and in the event of failure at the elbow 61 between branches 56, 57, which tests have shown to be subject to greater deformation and/or damage.

Device 60 comprises a rocker arm lever 62 housed in portion 20 and in turn comprising an intermediate portion 63 hinged to an end wall 64 opposite slit 30 to rotate about an axis 65 parallel to axis 41. Lever 62 also comprises two opposite arms 66, 67. Arm 66 is L-shaped and comprises a straight branch 68 extending from portion 63 towards opening 25; and a tooth 69 projecting from the end of branch 68 towards slide 26. Arm 67 is also L-shaped, and comprises a branch 70 aligned with branch 68; and a rod 71 projecting from the end of branch 70 towards branch 56 of lever 40, and located alongside member 36 without interfering with slide 26.

Lever 62 is oscillated about axis 65, by the opposite forces of lever 40 and a spring 72 interposed between wall 64 and branch 70, to and from a retaining position, in which tooth 69 engages a seat 74, formed laterally in slide 26, to retain slide 26 in the withdrawn rest position.

In actual use, when lock 10 is operated to withdraw slide 26 into the rest position, rotation of lever 40 (anticlockwise in Figure 3) brings branch 56 into contact with the end of rod 71, and so pushes lever 62 into the retaining position in opposition to the elastic action of spring 72.

When slide 26 is withdrawn fully into the rest position, lever 62 therefore rotates (clockwise in Figure 3) so that tooth 69 engages seat 74.

If lever 40 should fail at a point close to elbow 61 in normal vehicle running conditions, slide 26 is retained in the rest position by tooth 69, which is maintained in a fixed position by branch 56 arresting rod 71 in opposition to spring 72.

As regards assembly of the Figure 3 variation, spring 72 and lever 62 can be inserted inside portion 20 and fitted to wall 64 before slide 26 is inserted inside seat 22.

In a variation not shown, tooth 69 and seat 74 are located on the opposite side of slide 26 to that shown in Figure 3. More specifically, tooth 69 may be defined by the end of a pin, which is pushed directly by a spring to translate perpendicularly to axis 24 towards seat 74 in opposition to an intermediate portion of the lever.

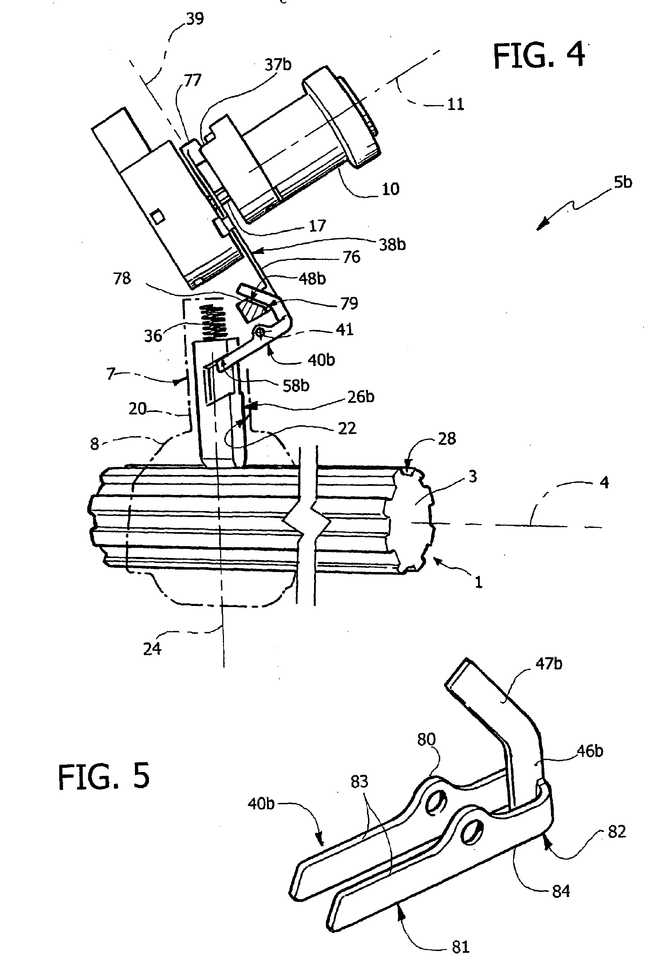

Figure 4 shows, partly, a variation 5b, the component parts of which are indicated where possible using the same reference numbers as for device 5.

Variation 5b has the advantage of being especially compact, and comprises a bolt 38b, a rocker arm lever 40b, and a slide 26b differing from bolt 38, lever 40 and slide 26 respectively. Bolt 38b is substantially Z-shaped, and comprises an intermediate portion 76 elongated along axis 39 and flattened parallel to axis 11; and two end portions 77, 78, of which portion 77 cooperates with a radial cam 37b similar to cam 37, while portion 78 has a shoulder 48b performing the same function as shoulder 48 and defining a seat 79.

As shown in Figure 5, lever 40b comprises an intermediate portion 80 hinged to portion 21 about axis 41; and two opposite arms 81, 82. Arm 81 is straight, performs the same function as branch 57, and is defined by two parallel appendixes 83 on opposite sides of slide 26b. Arm 82 is substantially C-shaped, with its concavity facing arm 81, and comprises a fork 84, the straight branches of which are aligned with appendixes 83. Arm 82 also comprises an L-shaped end portion 85, in turn comprising two straight branches 46b, 47b forming an angle of over 90°, like branches 46 and 47. More specifically, branch 46b extends perpendicularly from fork 84, while branch 47b engages seat 79 and rests on shoulder 48b.

Slide 26b differs from slide 26 by having two shoulders 58b (only one shown in Figure 4), as opposed to shoulder 58, located on opposite faces and each resting on a relative appendix 83.

The component parts of variation 5b operate and are assembled in the same way as for device 5, and are therefore not described in detail.

As will be clear from the above description and accompanying drawings, the shape of lever 40, 40b and the location of axis 39 provide for obtaining a compact steering lock device, which is fully mechanical and comprises a relatively small number of component parts. In particular, by comprising at least one L-shaped end portion, transmission 35 can be adapted to configurations requiring compactness.

Device 60 clearly also provides for improving the safety of device 5 in normal vehicle running conditions, by preventing slide 26 from moving into the lock position in the event of failure of end portion 51 of lever 40. The same obviously also applies to slide 26b in variation 5b described above.

Clearly, changes may be made to device 5 as described herein without, however, departing from the scope of the present invention.

In particular, the casing of the steering lock device may differ from the one described by way of example.

## Claims

1. A steering lock device (5) for an automotive steering assembly (1); the device comprising:
- a guide (22) connected integrally to a fixed body of said steering assembly (1);
- a lock slide (26; 26b) fitted to said guide (22) to slide in a first direction (24) between a lock position and a rest position;
- a lock (10) defining an insertion and rotation axis of a key (11); and
- actuating means (35) for moving said lock slide (26) into said rest position under the control of said lock (10); said actuating means (35) comprising a bolt (38; 38b) sliding in a second direction (39) forming an angle of other than zero and other than ninety degrees with said first direction (24);
**characterized in that** said second direction (39) is perpendicular to said insertion and rotation axis of the key (11); and **in that** said actuating means (35) also comprise a rocker arm transmission lever (40; 40b) defined by an intermediate hinge portion (42; 80), and by two opposite arms (44, 45; 81, 82) resting on respective shoulders (48, 58; 48b, 58b) carried by said bolt (38; 38b) and by said lock slide (26; 26b) respectively; at least one (44, 45; 81) of said opposite arms comprising an L-shaped end portion (44, 51; 85).

2. A device as claimed in any one of the foregoing Claims, **characterized in that** said L-shaped end portion (44; 85) comprises two straight branches (46, 47; 46b, 47b) forming an angle of over 90°.

3. A device as claimed in Claim 1 or 2, **characterized in that** said opposite arms (44, 45) comprise respective L-shaped end portions (44, 51).

4. A device as claimed in Claim 3, **characterized in that** said opposite arms (44, 45) are L-shaped and Z-shaped respectively.

5. A device as claimed in any one of the foregoing Claims, **characterized in that** said opposite arms (44, 45) comprise respective straight branches (46, 50) extending from said intermediate hinge portion (42) and perpendicular to each other.

6. A device as claimed in Claim 1 or 2, **characterized in that** said opposite arms (81, 82) comprise respective straight branches (81, 84) extending from said intermediate hinge portion (80) and aligned with each other.

7. A device as claimed in Claim 1, 2 or 6, **characterized in that** one (82) of said opposite arms is C-shaped with its concavity facing the other arm (81).

8. A device as claimed in any one of the foregoing Claims, **characterized in that** one (81) of said opposite arms comprises two parallel straight appendixes (83) on opposite sides of said lock slide (26b).

9. A device as claimed in any one of the foregoing Claims, **characterized in that** said shoulders (48, 58; 48b, 58b) are formed in one piece with said bolt (38; 38b) and with said lock slide (26; 26b).

10. A device as claimed in any one of the foregoing Claims, **characterized by** comprising safety retaining means (60) cooperating with said lock slide (26) to prevent the lock slide from moving into the lock position in the event of failure of said transmission lever (40).

11. A device as claimed in Claim 10, **characterized in that** said safety retaining means (60) comprise a retaining tooth (69), and elastic means (72) for moving said retaining tooth (69) into a retaining position retaining said lock slide (26).

12. A device as claimed in Claim 11, **characterized in that** said safety retaining means (60) comprise a further rocker arm lever (62) interposed between said elastic means (72) and said retaining tooth (69).

13. A device as claimed in Claim 11 or 12, **characterized in that** said retaining tooth (69) is moved by said transmission lever (40) in opposition to said elastic means (72).

14. A device as claimed in Claims 12 and 13, **characterized in that** said further rocker arm lever (62) rotates about a hinge axis (65) perpendicular to said first direction (24); said safety retaining device (60) comprising a push rod (71) interposed between said transmission lever (40) and an arm (70) of said further rocker arm lever (62), and located on the opposite side of said hinge axis (65) to said retaining tooth (69).

## Patentansprüche

1. Lenkradschloss-Vorrichtung (5) für eine Lenkvorrichtung (1) eines Automobils; wobei die Vorrichtung folgendes umfasst:
- eine Führung (22), die als Ganzes mit einem feststehenden Teil der Lenkvorrichtung (1) verbunden ist;
- Schließbolzen (26; 26b), der an die Führung (22) angepasst ist, um in einer ersten Richtung (24) zwischen einer Schließposition und einer Ruheposition hin und her zu gleiten;
- ein Schloss (10), das die Einführungs- und Rotationsachse eines Schlüssels (11) festlegt; und
- Betätigungselemente (35), zur Bewegung des Schließbolzens (26) unter Führung des Schlosses (10) in die Ruheposition, wobei die Betätigungselemente (35) einen Gleitzylinder (38; 38b) umfassen, der in eine zweite Richtung (39) gleitet, welche zur ersten Richtung (24) einen Winkel bildet, der weder 0° noch 90° ist;
**dadurch gekennzeichnet, dass** die zweite Richtung (39) senkrecht zur Einführungs- und Rotationsachse des Schlüssels (11) steht; und dass die Betätigungselemente (35) ferner einen Kickhebel-Übertragungsarm (40; 40b) umfassen, der durch einen mittleren Gelenkteil (42; 80) und durch zwei einander gegenüberliegende Arme (44, 45; 81, 82) festgelegt wird, welche jeweils auf Halteschultern (48, 58; 48b, 58b) aufliegen, die durch den Gleitzylinder (38; 38b) und entsprechend durch den Schließbolzen (26; 26b) getragen werden, wobei wenigstens einer der einander gegenüberliegenden Arme (44, 45; 81) einen L-förmigen Endbereich (44, 51; 85) umfasst.

2. Vorrichtung nach einem der vorhergehenden Ansprüche, **dadurch gekennzeichnet, dass** der L-förmige Endbereich (44; 85) zwei gerade verlaufende Zweige (46, 47; 46b, 47b), die zueinander einen Winkel größer als 90° bilden, umfasst.

3. Vorrichtung nach Anspruch 1 oder 2, **dadurch gekennzeichnet, dass** die einander gegenüberliegende Arme (44, 45) jeweils L-förmige Endbereiche (44, 51) umfassen.

4. Vorrichtung nach Anspruch 3, **dadurch gekennzeichnet, dass** die einander gegenüberliegende Arme (44, 45) L-förmig und entsprechend Z-förmig ausgebildet sind.

5. Vorrichtung nach einem der vorhergehenden Ansprüche, **dadurch gekennzeichnet, dass** die einander gegenüberliegende Arme (44, 45) jeweils gerade verlaufende Zweige (46, 50), die vom mittleren Gelenkteil (42) ausgehen und welche senkrecht zueinander verlaufen, umfassen.

6. Vorrichtung nach Anspruch 1 oder 2, **dadurch gekennzeichnet, dass** die einander gegenüberliegende Arme (81, 82) gerade verlaufende Zweige (81, 84) umfassen, die von dem mittleren Gelenkteil (80) ausgehen und zueinander fluchten.

7. Vorrichtung nach Anspruch 1, 2 oder 6, **dadurch gekennzeichnet, dass** einer der einander gegenüberliegenden Arme (82) C-förmig ausgebildet ist mit einer Wölbung, die zum anderen Arm (81) hin zeigt.

8. Vorrichtung nach einem der vorhergehenden Ansprüche, **dadurch gekennzeichnet, dass** einer der einander gegenüberliegenden Arme (81) zwei parallele, gerade verlaufende Fortsätze (83) auf zueinander gegenüberliegenden Seiten des Schließbolzens (26b) umfasst.

9. Vorrichtung nach einem der vorhergehenden Ansprüche, **dadurch gekennzeichnet, dass** die Halteschultern (48, 58; 48b, 58b) mit dem Gleitzylinder (38; 38b) und dem Schließbolzen (26; 26b) in einem Stück ausgebildet sind.

10. Vorrichtung nach einem der vorhergehenden Ansprüche, **dadurch gekennzeichnet, dass** diese Sicherheitsrückhalteelemente (60) umfasst, die mit dem Schließbolzen (26) zusammenwirken, um im Falle eines Ausfalls des Kickhebel-Übertragungsarms eine Bewegung des Schließbolzens in die Verschlussposition zu verhindern.

11. Vorrichtung nach Anspruch 10, **dadurch gekennzeichnet, dass** die Sicherheitsrückhalteelemente (60) einen Rückhaltezahn (69) und elastische Elemente (72) zur Bewegung des Rückhaltezahns (69) in eine Rückhalteposition umfassen, in welcher der Schließbolzen (26) zurückgehalten wird.

12. Vorrichtung nach Anspruch 11, **dadurch gekennzeichnet, dass** die Sicherheitsrückhalteelemente (60) ferner einen weiteren Kickhebelarm (62) umfassen, der zwischen den elastischen Elementen (72) und dem Rückhaltezahn (69) zwischengeschaltet ist.

13. Vorrichtung nach Anspruch 11 oder 12, **dadurch gekennzeichnet, dass** der Rückhaltezahn (69) durch den Kickhebel-Übertragungsarm (40) entgegen der elastischen Elemente (72) bewegt wird.

14. Vorrichtung nach einem der Ansprüche 12 oder 13, **dadurch gekennzeichnet, dass** der weitere Kickhebelarm (62) um eine Gelenkachse (65) rotiert, die senkrecht zur ersten Richtung (24) steht und die Sicherheitsrückhalteelemente (60) ein Schubgestänge (71) umfassen, das zwischen dem Kickhebel-Übertragsarm (40) und einem Arm (70) des weiteren Kickhebelarms (62) zwischengeschaltet ist und welches im Verhältnis zur Gelenkachse (65) zum Rückhaltezahn (69) gegenüberliegend angeordnet ist.

## Revendications

1. Dispositif de blocage de direction (5) pour une direction automobile (1) ; le dispositif comprenant :
- un guide (22) connecté de manière intégrée à un corps fixe de ladite direction (1) ;
- une glissière de blocage (26 ; 26b) ajustée sur ledit guide (22) afin de coulisser dans une première direction (24) entre une position de blocage et une position de repos ;
- un verrou (10) définissant un axe d'insertion et de rotation d'une clé (11) ; et
- des moyens d'actionnement (35) destinés à déplacer ladite glissière de blocage (26) dans ladite position de repos sous le contrôle dudit verrou (10) ; lesdits moyens d'actionnement (35) comprenant un boulon (38 ; 38b) coulissant dans une deuxième direction (39) formant un angle autre que zéro et autre que quatre-vingt-dix degrés avec ladite première direction (24) ;
**caractérisé en ce que** ladite deuxième direction (39) est perpendiculaire audit axe d'insertion et de rotation de la clé (11); et **en ce que** lesdits moyens d'actionnement (35) comprennent également un levier de transmission à culbuteur (40 ; 40b) défini par une partie de charnière intermédiaire (42 ; 80) et par deux bras opposés (44, 45 ; 81, 82) reposant sur des épaulements respectifs (48, 58 ; 48b, 58b) portés par ledit boulon (38 ; 38b) et par ladite glissière de blocage (26 ; 26b), respectivement ; au moins un (44, 45 ; 81) desdits bras opposés comprenant une partie d'extrémité en forme de L (44, 51 ; 85).

2. Dispositif selon l'une quelconque des revendications précédentes, **caractérisé en ce que** ladite partie d'extrémité en forme de L (44 ; 85) comprend deux montants droits (46, 47 ; 46b, 47b) formant un angle supérieur à 90°.

3. Dispositif selon la revendication 1 ou 2, **caractérisé en ce que** lesdits bras opposés (44, 45) comprennent des parties d'extrémité en forme de L respectives (44, 51).

4. Dispositif selon la revendication 3, **caractérisé en ce que** lesdits bras opposés (44, 45) sont en forme de L et en forme de Z respectivement.

5. Dispositif selon l'une quelconque des revendications précédentes, **caractérisé en ce que** lesdits bras opposés (44, 45) comprennent des montants droits respectifs (46, 50) s'étendant depuis ladite partie de charnière intermédiaire (42) et perpendiculaires l'un à l'autre.

6. Dispositif selon la revendication 1 ou 2, **caractérisé en ce que** lesdits bras opposés (81, 82)_{'} comprennent des montants droits respectifs (81, 84) s'étendant depuis ladite partie de charnière intermédiaire (80) et alignés l'un avec l'autre.

7. Dispositif selon la revendication 1, 2 ou 6, **caractérisé en ce que** un (82) desdits bras opposés est en forme de C avec sa concavité faisant face vers l'autre bras (81).

8. Dispositif selon l'une quelconque des revendications précédentes, **caractérisé en ce que** un (81) desdits bras opposés comprend deux appendices droits parallèles (83) sur des côtés opposés de ladite glissière de blocage (26b).

9. Dispositif selon l'une quelconque des revendications précédentes, **caractérisé en ce que** lesdits épaulements (48, 58 ; 48b, 58b) sont formés en une pièce avec ledit boulon (38 ; 38b) et avec ladite glissière de blocage (26 ; 26b).

10. Dispositif selon l'une quelconque des revendications précédentes, **caractérisé en ce qu'**il comprend des moyens de retenue de sécurité (60) coopérant avec ladite glissière de blocage (26) afin d'empêcher la glissière de blocage de se déplacer dans la position de blocage dans le cas d'une panne dudit levier de transmission (40).

11. Dispositif selon la revendication 10, **caractérisé en ce que** lesdits moyens de retenue de sécurité (60) comprennent une dent de retenue (69) et des moyens élastiques (72) afin de déplacer ladite dent de retenue (69) dans une position de retenue retenant ladite glissière de blocage (26).

12. Dispositif selon la revendication 11, **caractérisé en ce que** lesdits moyens de retenue de sécurité (60) comprennent un autre levier à culbuteur (62) interposé entre lesdits moyens élastiques (72) et ladite dent de retenue (69).

13. Dispositif selon la revendication 11 ou 12, **caractérisé en ce que** ladite dent de retenue (69) est déplacée par ledit levier de transmission (40) en opposition auxdits moyens élastiques (72).

14. Dispositif selon les revendications 12 et 13, **caractérisé en ce que** ledit autre levier à culbuteur (62) tourne autour d'un axe d'articulation (65) perpendiculaire à ladite première direction (24) ; ledit dispositif de retenue de sécurité (60) comprenant une tige de poussée (71) interposée entre ledit levier de transmission (40) et un bras (70) dudit autre levier à culbuteur (62) et située sur le côté opposé dudit axe d'articulation (65) par rapport à ladite dent de retenue (69).
